# EUROPEAN PATENT APPLICATION

(11) **EP 3 258 666 A2**
(43) Date of publication of application: **20.12.2017**
(21) Application number: 17172297.8
(22) Date of filing: 22.05.2017
(51) Int. Cl.: H04L 29/06, H04W 4/02, H04L 29/08, G06F 21/55, G06F 21/57

(54) **CONSIDERING GEOLOCATION INFORMATION IN A SECURITY INFORMATION SHARING PLATFORM**

(30) Priority: 16.06.2016 US 201615184350
(71) Applicant: Hewlett Packard Enterprise Development LP, Houston, TX 77070 (US)
(72) Inventor: Hein, Brian, Aliso Viejo, California 92656 (US); Kibbar, Amir, Sunnyvale, California 94089 (US); Sander, Tomas, Princeton, New Jersey 08540 (US)
(74) Representative: HGF Limited

(57) **Abstract**

Examples disclosed herein relate to considering geolocation information in a security information sharing platform. Some examples may enable determining geolocation information for a security indicator shared to the security information sharing platform. Some examples may enable determining an indicator score associated with the security indicator based on the determined geolocation information. Some examples may enable facilitating display, via a user interface, the first indicator score to the first community of users based on the indicator score.

## Description

### BACKGROUND

Users of a security information sharing platform share security indicators, security alerts, and/or other security-related information (e.g., mitigations strategies, attackers, attack campaigns and trends, threat intelligence information, etc.) with other users in an effort to advise the other users of any security threats, or to gain information related to security threats from other users.

### BRIEF DESCRIPTION OF THE DRAWINGS

The following detailed description references the drawings, wherein:
FIG. 1 is a block diagram depicting an example environment in which various examples may be implemented as a security information sharing platform that considers geolocation information.
FIG. 2 is a block diagram depicting an example security information sharing platform that considers geolocation information.
FIG. 3 is a block diagram depicting an example machine-readable storage medium comprising instructions executable by a processor for considering geolocation information on a security information sharing platform.
FIG. 4 is a block diagram depicting an example machine-readable storage medium comprising instructions executable by a processor for considering geolocation information on a security information sharing platform.
FIG. 5 is a flow diagram depicting an example method for considering geolocation information on a security information sharing platform.
FIG. 6 is a flow diagram depicting an example method for considering geolocation information on a security information sharing platform.
FIG. 7 is a flow diagram depicting an example method for considering geolocation information on a security information sharing platform.

### DETAILED DESCRIPTION

The following detailed description refers to the accompanying drawings. Wherever possible, the same reference numbers are used in the drawings and the following description to refer to the same or similar parts. It is to be expressly understood, however, that the drawings are for the purpose of illustration and description only. While several examples are described in this document, modifications, adaptations, and other implementations are possible. Accordingly, the following detailed description does not limit the disclosed examples. Instead, the proper scope of the disclosed examples may be defined by the appended claims.

Users of a security information sharing platform share security indicators, security alerts, and/or other security-related information (e.g., incidents, mitigations strategies, attackers, attack campaigns and trends, threat intelligence information, etc.) with other users in an effort to advise the other users of any security threats, or to gain information related to security threats from other users. The other users with whom the security information is shared typically belong to a community that is selected by the user for sharing, or to the same community as the user. The other users of such communities may further share the security information with further users and/or communities. A "user," as used herein, may include an individual, organization, or any entity that may send, receive, and/or share the security information. A community may include a plurality of users. For example, a community may include a plurality of individuals in a particular area of interest. A community may include a global community where any user may join, for example, via subscription. A community may also be a vertical-based community. For example, a vertical-based community may be a healthcare or a financial community. A community may also be a private community with a limited number of selected users.

A "security indicator," as used herein, may refer to a detection guidance for a security threat and/or vulnerability. In other words, the security indicator may specify what to detect or look for (e.g., an observable) and/or what it means if detected. For example, the security indicator may specify a certain Internet Protocol (IP) address to look for in the network traffic. The security indicator may include the information that the detection of that IP address in the network traffic can indicate a certain malicious security threat such as a Trojan virus. Since security indicators can be easily created and/or added by various users using the security information sharing platform, there may be a risk that a certain security indicator is erroneously classified (e.g., as non-malicious that poses an actual security threat, or as malicious but does not pose an actual security threat). For example, if a popular news site that is actually benign and not malicious is included as an observable in a security indicator, the site can be blocked, causing inconvenience to the users and/or communities. Moreover, this may cause erroneous security alerts to be generated, contaminating the data being shared and continuously being re-shared in the security information sharing environment. It may also cause issues for communities or users that may want to share security indicators.

Examples disclosed herein provide technical solutions to these technical challenges by implementing a scoring mechanism to determine an indicator score associated with a security indicator that considers geolocation information. The examples disclosed herein enable obtaining a security indicator via the security information sharing platform. The examples enable determining geolocation information associated with the security indicator. The examples enable determining an indicator score associated with the security indicator based on the determined geolocation information. The examples enable facilitating display, via a user interface, of the security indicator to a first community based on the determined indicator score.

The terminology used herein is for the purpose of describing particular embodiments only and is not intended to be limiting. As used herein, the singular forms "a," "an," and "the" are intended to include the plural forms as well, unless the context clearly indicates otherwise. The term "plurality," as used herein, is defined as two or more than two. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system. The term "and/or" as used herein refers to and encompasses any and all possible combinations of one or more of the associated listed items. It will also be understood that, although the terms first, second, third, etc. may be used herein to describe various elements, these elements should not be limited by these terms, as these terms are only used to distinguish one element from another unless stated otherwise or the context indicates otherwise. As used herein, the term "includes" means includes but not limited to, the term "including" means including but not limited to. The term "based on" means based at least in part on.

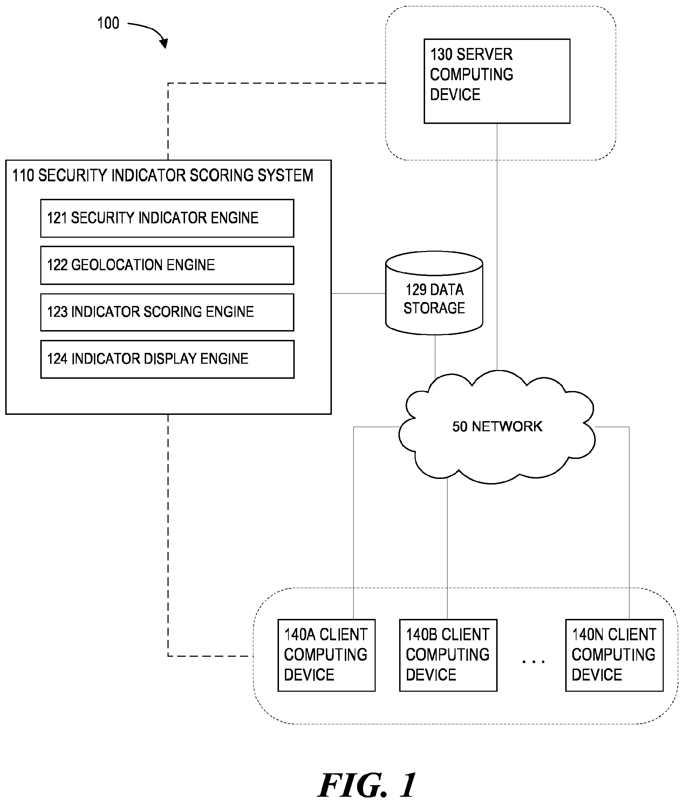

FIG. 1 is an example environment 100 in which various examples may be implemented as a security indicator scoring system 110. Environment 100 may include various components including server computing device 130 and client computing devices 140 (illustrated as 140A, 140B, ..., 140N). Each client computing device 140A, 140B, ..., 140N may communicate requests to and/or receive responses from server computing device 130. Server computing device 130 may receive and/or respond to requests from client computing devices 140. Client computing devices 140 may be any type of computing device providing a user interface through which a user can interact with a software application. For example, client computing devices 140 may include a laptop computing device, a desktop computing device, an all-in-one computing device, a tablet computing device, a mobile phone, an electronic book reader, a network-enabled appliance such as a "Smart" television, and/or other electronic device suitable for displaying a user interface and processing user interactions with the displayed interface. While server computing device 130 is depicted as a single computing device, server computing device 130 may include any number of integrated or distributed computing devices serving at least one software application for consumption by client computing devices 140.

The various components (e.g., components 129, 130, and/or 140) depicted in FIG. 1 may be coupled to at least one other component via a network 50. Network 50 may comprise any infrastructure or combination of infrastructures that enable electronic communication between the components. For example, network 50 may include at least one of the Internet, an intranet, a PAN (Personal Area Network), a LAN (Local Area Network), a WAN (Wide Area Network), a SAN (Storage Area Network), a MAN (Metropolitan Area Network), a wireless network, a cellular communications network, a Public Switched Telephone Network, and/or other network. According to various implementations, security indicator scoring system 110 and the various components described herein may be implemented in hardware and/or a combination of hardware and programming that configures hardware. Furthermore, in FIG. 1 and other Figures described herein, different numbers of components or entities than depicted may be used.

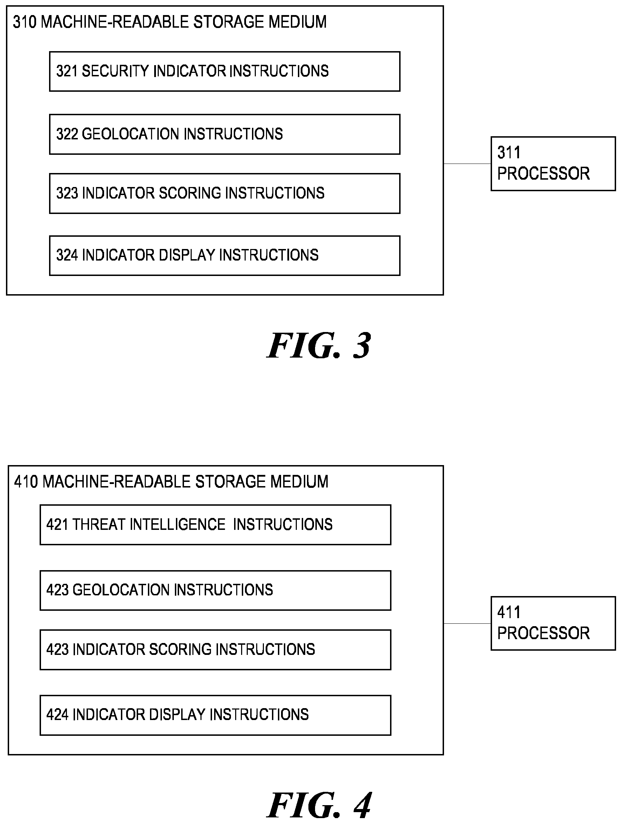

Security indicator scoring system 110 may comprise a security indicator engine 121, a geolocation engine 122, an indicator scoring engine 123, an indicator display engine 124, and/or other engines. The term "engine", as used herein, refers to a combination of hardware and programming that performs a designated function. As is illustrated with respect to FIGS. 3-4, the hardware of each engine, for example, may include one or both of a physical processor and a machine-readable storage medium, while the programming is instructions or code stored on the machine-readable storage medium and executable by the processor to perform the designated function.

Security indicator engine 121 may obtain a security indicator created by a user. A "security indicator," as used herein, may refer to a detection guidance for a security threat and/or vulnerability. In other words, the security indicator may specify what to detect or look for (e.g., an observable) and/or what it means if detected. For example, the security indicator may specify a certain Internet Protocol (IP) address to look for in the network traffic. The security indicator may include the information that the detection of that IP address in the network traffic can indicate a certain malicious security threat such as a Trojan virus. An "observable," as used herein, may refer to an event pertinent to the operation of computers and networks (e.g., an event occurring in network, servers, applications, databases, and/or various components of any computer system). Examples of an observable may include but not be limited to: an IP address, a domain name, an e-mail address, Uniform Resource Locator (URL), and a software file hash. A security indicator may comprise a single observable (e.g., "a new file is created by an executable") or a plurality of observables (e.g., "a new file is created by an executable and "the executable connects to domain X").

A security indicator may be created by and/or originated from at least one of a plurality of source entities. For example, the plurality of source entities may include a user. A security indicator may be manually created and/or added to the security information sharing platform by the user. In another example, the plurality of source entities may include a threat intelligence provider that provides threat intelligence feeds. A security indicator that is found in the intelligence feeds, for example, may be created and/or added to the security information sharing platform. There exist a number of providers of threat intelligence feeds, both open source and paid or closed source. The threat intelligence feeds may be provided by independent third parties such as security service providers. These providers and/or sources may supply the threat intelligence feeds that provide information about threats the providers have identified. Most threat intelligence feeds, for example, include lists of domain names, IP addresses, and URLs that various providers have classified as malicious or at least suspicious according to different methods and criteria.

In some implementations, the user when creating the security indicator may specify a level of relevance associated with the security indicator (e.g., the level of relevance that the indicator has to the community the user is in) and/or a level of severity (e.g., likely impact) associated with the security indicator (e.g., the level of severity or likely impact that the indicator may pose). Security indicator engine 121 may obtain the security indicator as well as the other information related to the indicator such as the level of relevance and the level of severity from the user.

Geolocation engine 122 may determine geolocation information associated with the security indicator. Geolocation engine 122 may, for example, determine geolocation information of a security indicator by mapping an IP address of the source of the indicator to a physical location. In some examples, geolocation engine 122 may extrapolate the mapped physical address to a set of physical locations. The set of physical locations may comprise, for example, a region, country, state, city, zip code, and/or other physical location to which the source could be mapped. As such, the geolocation engine 122 may determine map the security indicator to different types of physical locations, such as a region, country, state, city zip code, and/or other type of physical location. Responsive to the security indicator having multiple sources, each source may be extrapolated to have a corresponding set of physical locations. By mapping the security indicator to a set of physical locations of different type, the geolocation engine 122 allows the security information sharing platform to consider threats and scoring of the security indicator based on the different types of locations associated with the security indicator.

Indicator scoring engine 123 may determine an indicator score associated with the security indicator for a community. The indicator scoring engine 123 may determine the indicator score based on at least one of the parameters including the determined geolocation information, the level of severity associated with the security indicator, the level of relevance to the community associated with the security indicator, and/or other parameters. Each of the parameters may be scaled by a corresponding weight. The weight may represent the weight or influence the particular parameter has on the indicator score. For example, the weight value may be any value from 0 to 100. The total sum of all weights of the parameters being used to determine the indicator score can be 100 in some situations, but is not necessarily 100.

In some examples, the indicator score may comprise a severity indicator score indicating a level of severity associated with the security indicator and/or a relevance indicator score indicating a level of relevance of the security indicator to a community with whom the security indicator may be shared. The below discussion regarding determining or revising an indicator score applies to both the indicator score for the security indicator, as well as the severity indicator score and relevance indicator score when appropriate.

Indicator scoring engine 123 may determine and/or revise an indicator score associated with the security indicator based on the determined geolocation information. The indicator scoring engine 123 may determine an indicator score based on the determined geolocation information by one or more of: associating threat levels with the determined geolocation information, based on community threat profiles for a community, based on regulatory/legal restrictions associated with the determined geolocation information, based on member preferences related to geolocation, based on the type of threat described in the security indicator, based on correlations between a set of threat intelligence obtained by the security information sharing platform, and/or based on other factors related to the security indicator.

Indicator scoring engine 123 may determine the indicator score associated with the security indicator based on the geolocation information and by associating a threat level with the determined geolocation information. The security indicator sharing platform may store a set of threat level associations. A threat level association may comprise, for example, a physical location associated with the security indicator, a destination physical location, and an associated threat level. In some examples, it may also comprise a physical location type (e.g, region, country, state, city, zip code, etc.). The destination physical location may indicate that the destination physical location is a target of the threat identified by the security indicator and may be used to determine which communities with which to share the security indicator. The set of threat level associations may be machine learned based on the security indicators obtained and analyzed by the system, may be obtained from an administrator of the system, and/or may be otherwise determined.

The indicator scoring engine 123 may compare the determined geolocation information with the stored set of threat level associations to determine if there are any matches between the physical locations of the set of threat level associations and the determined geolocation information and between the destination physical location and the physical location of the community and/or its members. Responsive to a match occurring, the indicator scoring engine may consider the associated threat level in determining the indicator score for the security indicator. Responsive to multiple matches occurring (e.g., across multiple physical location types of the determined geolocation information), the indicator scoring engine 123 may consider the highest threat level, an average threat level of the matches, may request input from the community about which associated threat level to use, and/or may otherwise determine how to consider the multiple associated threat levels from the multiple matches.

In some examples, the threat level associations included in a community threat profile may affect the severity indicator score of the security indicator and may or may not affect a relevancy indicator score of a security indicator.

In some examples, the indicator scoring engine 123 associates a threat level with the determined geolocation information based on a community threat profile for a community. In these examples, a community may create and/or maintain a community threat profile that indicates, for various physical locations of various types, an associated threat level. For example, a community might indicate that a security indicator with determined geolocation information relating to China has a higher threat level than a security indicator with determined geolocation information relating to London. The community threat profile may be generated and/or maintained by an administrator of the community, based on consensus vote of community members, based on majority vote of community members, based on inclusion of a threat level association by at least a quorum of community members, and/or otherwise generated and maintained. In some examples, the community threat profile may also comprise threat level associations for individual members of the community as well.

The community threat profile may also comprise information about security indicators to automatically block and/or automatically share, based on the determined geolocation. For example, the community threat profile may indicate that all foreign indicators (e.g., indicators with a physical source location outside of the country of the community) should be automatically blocked. Alternatively, the community threat profile may indicate that all security indicators from a physical location should be automatically shared (e.g,. all security indicators with a physical location of a source from China).

In some examples, the threat level associations included in a community threat profile may affect the relevancy indicator score of the security indicator but may not affect a severity indicator score of a security indicator.

Responsive to a community not having a threat level associated with determined geolocation information in its community threat profile, the indicator scoring engine 123 may rely on threat levels associated with the determined geolocation from the security information sharing platform.

Indicator scoring engine 123 may determine the indicator score based on regulatory/legal restrictions associated with the determined geolocation information. For example, a country may have regulations against personally identifiable data or health data leaving its borders. In another example, a country may have legal restrictions about the transfer of certain types of data. The indicator scoring engine may consider such regulatory or legal restrictions in determining an indicator score for a security indicator for a community. In some examples, the threat level associations based on regulatory/legal restrictions may affect the relevancy indicator score of the security indicator and may affect a severity indicator score of a security indicator.

Indicator scoring engine 123 may determine the indicator score based on the type of threat described in the security indicator. For example, in some threat level associations, the associations may also include a type of security indicator. A type of security indicator may comprise information about a type of automated message received by the security information sharing platform, a taxonomy object identification for a message, and/or other indication of message type. For a specific type of automated message (resulting in a security indicator of a certain type), the indicator scoring engine 123 may determine that the community could (or could not) resolve the issue associated with the type of security indicator and may increase the relevancy score for that community accordingly. In some examples, the threat level associations considered based on the type of threat described in the security indicator may affect the relevancy indicator score of the security indicator but may not affect a severity indicator score of a security indicator.

Indicator scoring engine 123 may determine the indicator score based on correlations between a set of threat intelligence obtained by the security information sharing platform. For example, indicator scoring engine 123 may obtain information relating to a set of threat intelligence, where each piece of threat information in the set of threat intelligence comprises information relating to an incident, attack, indicator sighting, attacker, or other threat. Indicator scoring engine 123 may determine geolocation information for each piece of threat information in the set of threat intelligence.

Responsive to determining geolocation information for each piece of threat information, indicator scoring engine 123 may compute a set of correlations between the determined geolocation information for each piece of threat information in the set of threat intelligence.

For example, indicator scoring engine 123 may determine, for the pieces of threat intelligence, whether a majority, a proportion, an amount higher than a predetermined threshold, or some other objective measure of a number of the pieces of threat intelligence are linked to a physical location of a certain type. For those pieces of threat intelligence linked to the physical location, the indicator scoring engine 123 may increase the indicator score (and/or a relevancy indicator score) for the security indicator for communities associated with that physical location. In another example, the indicator scoring engine 123 may increase the indicator score (and/or the relevancy score) for communities that are targeted by entities known to reside in that physical location.

In another example, indicator scoring engine 123 may compute correlations to determine whether patterns exist between the threat intelligence. For example, the indicator scoring engine 123 may determine whether threat intelligence is being received from a physical location at predetermined time intervals, whether threat intelligence is being sent to a physical location at predetermined time intervals, the top predetermined number of physical locations that are involved in threat intelligence, and/or other patterns detectable by computing correlations between the determined geolocation information for each piece of threat information in the set of threat intelligence.

Indicator display engine 124 may display, via a user interface, of the security indicator to a community based on the determined indicator score. Responsive to the indicator score for the security indicator exceeding a predetermined threshold, the indicator display engine 125 may facilitate display of the security indicator. In some examples, the predetermined threshold may be a threshold determined by the security information sharing platform (e.g., set by an administrator of the platform, determined by machine learning based on security indicators obtained by the platform, stored in a machine-readable storage medium of the platform, and/or otherwise determined). In other examples, the predetermined threshold may be determined for each community in the security information sharing platform. In these examples, the predetermined threshold may be determined by an administrator of the community, based on community vote, based on machine learning of security indicators obtained/shared by the community, based on a community threat profile maintained by the community, and/or otherwise determined.

In some examples, the indicator score comprises a relevancy indicator score and a severity indicator score. In these examples, the indicator display engine 125 may facilitate display of the security indicator responsive to either or both the relevancy indicator score exceeding a predetermined relevancy score threshold or the severity indicator score exceeding a predetermined severity score threshold. The predetermined relevancy score threshold and predetermined severity score threshold may be determined in a manner the same as or similar to the predetermined threshold for the indicator score.

The security indicator may be displayed, via the user interface (e.g., of the security information sharing platform), to the community of users (e.g., of the security information sharing platform). Any information related to the security indicator may be also presented. As such, any user of the community of users may access the security indicator and/or the information related to the indicator via the user interface. Examples of the information related to the security indicator may include but not be limited to: an indicator score associated with the security indicator (e.g., as discussed herein with respect to indicator scoring engine 127), information related to a source entity of the indicator (e.g., identification of the source entity, level of source reliability associated with the source entity, etc.), a relevance indicator score associated with the security indicator (e.g., as discussed herein with respect to security indicator engine 123), a severity indicator score associated with the security indicator (e.g., as discussed herein with respect to security indicator engine 123), whether the indicator was displayed responsive to the relevance indicator score and/or the severity indicator score exceeding respective predetermined thresholds, geolocation information associated with the indicator, and/or other information about the indicator.

In performing their respective functions, engines 121-124 may access data storage 129 and/or other suitable database(s). Data storage 129 may represent any memory accessible to security indicator scoring system 110 that can be used to store and retrieve data. Data storage 129 and/or other database may comprise random access memory (RAM), read-only memory (ROM), electrically-erasable programmable read-only memory (EEPROM), cache memory, floppy disks, hard disks, optical disks, tapes, solid state drives, flash drives, portable compact disks, and/or other storage media for storing computer-executable instructions and/or data. Security indicator scoring system 110 may access data storage 129 locally or remotely via network 50 or other networks.

Data storage 129 may include a database to organize and store data. The database may reside in a single or multiple physical device(s) and in a single or multiple physical location(s). The database may store a plurality of types of data and/or files and associated data or file description, administrative information, or any other data.

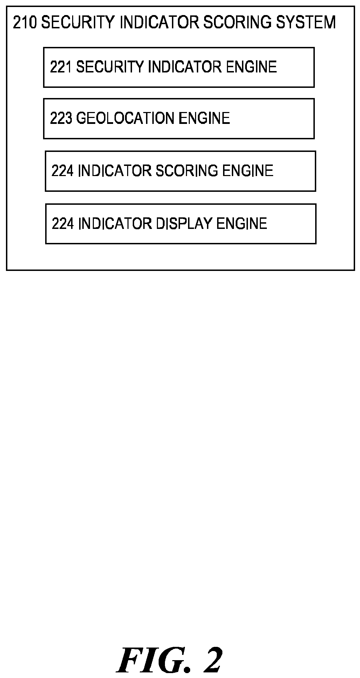

FIG. 2 is a block diagram depicting an example security indicator scoring system 210. Security indicator scoring system 210 may comprise a security indicator engine 221, a geolocation engine 222, an indicator scoring engine 223, an indicator display engine 224, and/or other engines. Engines 221-224 represent engines 121-124, respectively.

FIG. 3 is a block diagram depicting an example machine-readable storage medium 310 comprising instructions executable by a processor for considering geolocation information in a security information sharing platform.

In the foregoing discussion, engines 121-124 were described as combinations of hardware and programming. Engines 121-124 may be implemented in a number of fashions. Referring to FIG. 3, the programming may be processor executable instructions 321-324 stored on a machine-readable storage medium 310 and the hardware may include a processor 311 for executing those instructions. Thus, machine-readable storage medium 310 can be said to store program instructions or code that when executed by processor 311 implements security indicator scoring system 110 of FIG. 1.

In FIG. 3, the executable program instructions in machine-readable storage medium 310 are depicted as security indicator instructions 321, geolocation instructions 322, indicator scoring instructions 323, and indicator display instructions 324. Instructions 321-324 represent program instructions that, when executed, cause processor 311 to implement engines 121-124, respectively.

FIG. 4 is a block diagram depicting an example machine-readable storage medium 410 comprising instructions executable by a processor for considering geolocation information in a security information sharing platform.

In the foregoing discussion, engines 121-124 were described as combinations of hardware and programming. Engines 121-124 may be implemented in a number of fashions. Referring to FIG. 4, the programming may be processor executable instructions 421-424 stored on a machine-readable storage medium 410 and the hardware may include a processor 411 for executing those instructions. Thus, machine-readable storage medium 410 can be said to store program instructions or code that when executed by processor 411 implements security indicator scoring system 110 of FIG. 1.

In FIG. 4, the executable program instructions in machine-readable storage medium 410 are depicted as threat intelligence instructions 421, geolocation instructions 422, indicator scoring instructions 423, and indicator display instructions 424.

Threat intelligence instructions 421, when executed, cause processor 411 to obtain information relating to a set of threat intelligence, where each piece of threat information in the set of threat intelligence comprises information relating to an incident, attack, indicator sighting, or attacker. In some examples, threat intelligence instructions 421 represent program instructions that, when executed, cause processor 411 to implement some or all of indicator scoring engine 123.

Geolocation instructions 422, when executed, cause processor 411 to determine geolocation information for each piece of threat information in the set of threat intelligence. In some examples, geolocation instructions 422 represent program instructions that, when executed, cause processor 411 to implement some or all of geolocation engine 122.

Indicator scoring instructions 423, when executed, cause processor 411 to compute a set of correlations between the determined geolocation information for each piece of threat information in the set of threat intelligence and determine an indicator score for each piece of threat information in the set of threat intelligence. In some examples, indicator scoring instructions 423 represent program instructions that, when executed, cause processor 411 to implement some or all of indicator scoring engine 123.

Indicator display instructions 424, when executed, cause processor 411 to facilitate display of information related to the first piece of threat information for a first community in the security information sharing platform responsive to determining that the indicator score for the first piece of threat information exceeds a predetermined indicator score threshold for the first community. In some examples, indicator display instructions 424 represent program instructions that, when executed, cause processor 411 to implement some or all of indicator display engine 124.

Machine-readable storage medium 310 (or machine-readable storage medium 410) may be any electronic, magnetic, optical, or other physical storage device that contains or stores executable instructions. In some implementations, machine-readable storage medium 310 (or machine-readable storage medium 410) may be a non-transitory storage medium, where the term "non-transitory" does not encompass transitory propagating signals. Machine-readable storage medium 310 (or machine-readable storage medium 410) may be implemented in a single device or distributed across devices. Likewise, processor 311 (or processor 411) may represent any number of processors capable of executing instructions stored by machine-readable storage medium 310 (or machine-readable storage medium 410). Processor 311 (or processor 411) may be integrated in a single device or distributed across devices. Further, machine-readable storage medium 310 (or machine-readable storage medium 410) may be fully or partially integrated in the same device as processor 311 (or processor 411), or it may be separate but accessible to that device and processor 311 (or processor 411).

In one example, the program instructions may be part of an installation package that when installed can be executed by processor 311 (or processor 411) to implement security indicator scoring system 110. In this case, machine-readable storage medium 310 (or machine-readable storage medium 410) may be a portable medium such as a floppy disk, CD, DVD, or flash drive or a memory maintained by a server from which the installation package can be downloaded and installed. In another example, the program instructions may be part of an application or applications already installed. Here, machine-readable storage medium 310 (or machine-readable storage medium 410) may include a hard disk, optical disk, tapes, solid state drives, RAM, ROM, EEPROM, or the like.

Processor 311 may be at least one central processing unit (CPU), microprocessor, and/or other hardware device suitable for retrieval and execution of instructions stored in machine-readable storage medium 310. Processor 311 may fetch, decode, and execute program instructions 321-324, and/or other instructions. As an alternative or in addition to retrieving and executing instructions, processor 311 may include at least one electronic circuit comprising a number of electronic components for performing the functionality of at least one of instructions 321-324, and/or other instructions.

Processor 411 may be at least one central processing unit (CPU), microprocessor, and/or other hardware device suitable for retrieval and execution of instructions stored in machine-readable storage medium 410. Processor 411 may fetch, decode, and execute program instructions 421-424, and/or other instructions. As an alternative or in addition to retrieving and executing instructions, processor 411 may include at least one electronic circuit comprising a number of electronic components for performing the functionality of at least one of instructions 421-424, and/or other instructions.

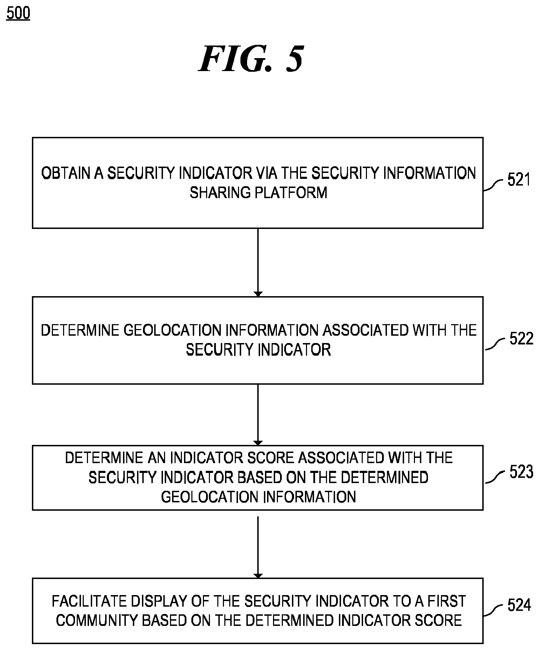

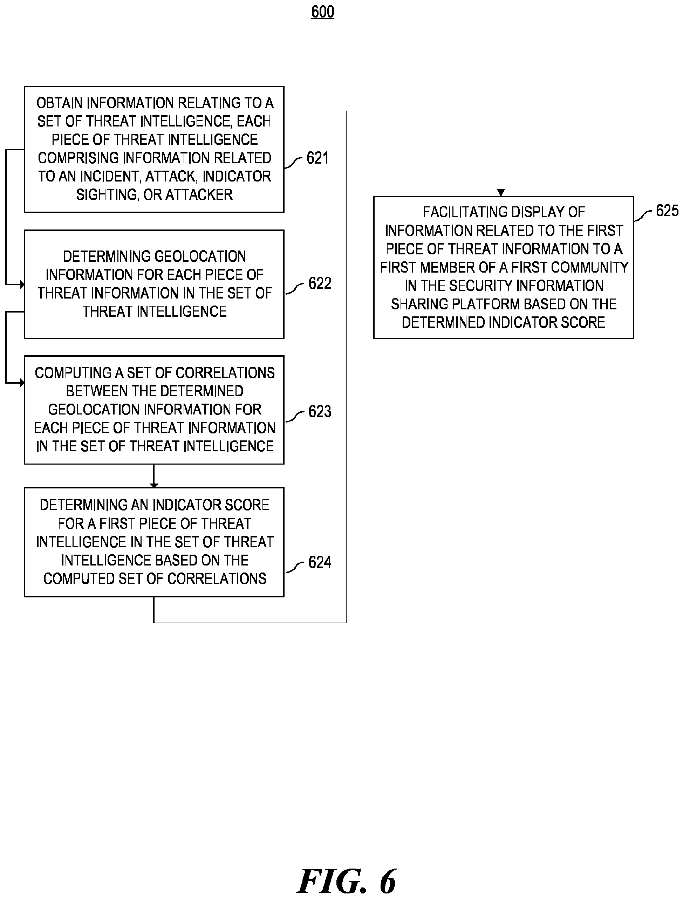

FIG. 5 is a flow diagram depicting an example method 500 for considering geolocation information in a security information sharing platform. The various processing blocks and/or data flows depicted in FIG. 5 (and in the other drawing figures such as FIGS. 6-7) are described in greater detail herein. The described processing blocks may be accomplished using some or all of the system components described in detail above and, in some implementations, various processing blocks may be performed in different sequences and various processing blocks may be omitted. Additional processing blocks may be performed along with some or all of the processing blocks shown in the depicted flow diagrams. Some processing blocks may be performed simultaneously. Accordingly, method 500 as illustrated (and described in greater detail below) is meant be an example and, as such, should not be viewed as limiting. Method 500 may be implemented in the form of executable instructions stored on a machine-readable storage medium, such as storage medium 310, storage medium 410, and/or in the form of electronic circuitry.

In block 521, method 500 may include obtaining a security indicator via a security information sharing platform. The security indicator may comprise a first observable. Examples of an observable may include but not be limited to: an IP address, a domain name, an e-mail address, Uniform Resource Locator (URL), and a software file hash. A security indicator may be created by and/or originated from at least one of a plurality of source entities (e.g., an individual user, an organization, threat intelligence provider, etc.). Referring back to FIG. 1, in some examples, security indicator engine 121 may be responsible for implementing block 521.

In block 522, method 500 may include determining geolocation information associated with the security indicator. Referring back to FIG. 1, in some examples, geolocation engine 122 may be responsible for implementing block 522.

In block 523, method 500 may include determining an indicator score associated with the security indicator based on the determined geolocation information. Referring back to FIG. 1, in some examples, indicator scoring engine 123 may be responsible for implementing block 523.

In block 524, method 500 may include facilitating display of the security indicator to a first community based on the determined indicator score. Referring back to FIG. 1, in some examples, indicator display engine 124 may be responsible for implementing block 524.

FIG. 6 is a flow diagram depicting an example method 600 for considering geolocation information in a security information sharing platform. Method 600 as illustrated (and described in greater detail below) is meant to be an example and, as such, should not be viewed as limiting. Method 600 may be implemented in the form of executable instructions stored on a machine-readable storage medium, such as storage medium 210, storage medium 310, storage medium 410, and/or in the form of electronic circuitry.

In block 621, method 600 may include obtaining information relating to a set of threat intelligence, each piece of threat intelligence comprising information related to an incident, attack, indicator sighting, or attacker. Referring back to FIG. 1, in some examples, security indicator engine 121 may be responsible for implementing block 621. In some examples, referring back to FIG. 4, threat intelligence instructions 421, when executed by processor 411, may be responsible for implementing block 621.

In block 622, method 600 may include determining geolocation information for each piece of threat intelligence in the set of threat intelligence. Referring back to FIG. 1, in some examples, geolocation engine 122 may be responsible for implementing block 622. In some examples, referring back to FIG. 4, geolocation instructions 422, when executed by processor 411, may be responsible for implementing block 622.

In block 623, method 600 may include computing a set of correlations between the determined geolocation information for each piece of threat intelligence of the set of threat intelligence. Referring back to FIG. 1, in some examples, geolocation engine 122 may be responsible for implementing block 623. In some examples, referring back to FIG. 4, geolocation instructions 422, when executed by processor 411, may be responsible for implementing block 623.

In block 624, method 600 may include determining an indicator score for a first piece of threat intelligence in the set of threat intelligence based on the computed set of correlations. Referring back to FIG. 1, in some examples, indicator scoring engine 124 may be responsible for implementing block 624. In some examples, referring back to FIG. 4, indicator scoring instructions 423, when executed by processor 411, may be responsible for implementing block 624.

In block 625, method 600 may include facilitating display of information related to the first piece of threat information to a first member of a first community in the security information sharing platform based on the determined indicator score. Referring back to FIG. 1, in some examples, indicator display engine 124 may be responsible for implementing block 625. In some examples, referring back to FIG. 4, indicator display instructions 424, when executed by processor 411, may be responsible for implementing block 625.

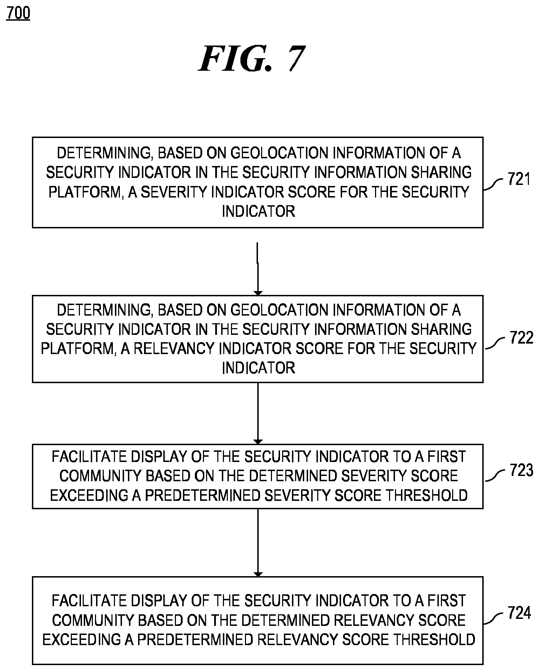

FIG. 7 is a flow diagram depicting an example method 600 for considering geolocation information in a security information sharing platform. Method 600 as illustrated (and described in greater detail below) is meant to be an example and, as such, should not be viewed as limiting. Method 700 may be implemented in the form of executable instructions stored on a machine-readable storage medium, such as storage medium 210, storage medium 310, and/or in the form of electronic circuitry.

In block 721, method 700 may include determining, based on geolocation information of a security indicator in the security information sharing platform, a severity indicator score for the security indicator. Referring back to FIG. 1, in some examples, indicator scoring engine 123 may be responsible for implementing block 721.

In block 722, method 700 may include determining, based on geolocation information of a security indicator in the security information sharing platform, a relevancy indicator score for the security indicator. Referring back to FIG. 1, in some examples, indicator scoring engine 123 may be responsible for implementing block 722.

In block 723, method 700 may include facilitating display of the security indicator to a first community based on the determined severity indicator score exceeding a predetermined severity score threshold. Referring back to FIG. 1, in some examples, indicator display engine 124 may be responsible for implementing block 723.

In block 724, method 700 may include facilitating display of the security indicator to a first community based on the determined relevancy indicator score exceeding a predetermined relevancy score threshold. Referring back to FIG. 1, in some examples, indicator display engine 124 may be responsible for implementing block 724.

The foregoing disclosure describes a number of example implementations for security indicator scores. The disclosed examples may include systems, devices, computer-readable storage media, and methods for security indicator scores. For purposes of explanation, certain examples are described with reference to the components illustrated in FIGS. 1-7. The functionality of the illustrated components may overlap, however, and may be present in a fewer or greater number of elements and components.

Further, all or part of the functionality of illustrated elements may co-exist or be distributed among several geographically dispersed locations. Moreover, the disclosed examples may be implemented in various environments and are not limited to the illustrated examples. Further, the sequence of operations described in connection with FIGS. 5-7 are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples. All such modifications and variations are intended to be included within the scope of this disclosure and protected by the following claims.

## Claims

1. A method for considering geolocation information in a security information sharing platform, the method comprising:
obtaining a security indicator via the security information sharing platform;
determining geolocation information associated with the security indicator;
determining an indicator score associated with the security indicator based on the determined geolocation information; and
facilitating display, via a user interface, of the security indicator to a first community based on the determined indicator score.

2. The method of claim 1, further comprising:
determining a threat level for the first community based on the determined geolocation information; and
determining the indicator score based on the determined geolocation information and the determined threat level.

3. The method of claim 1, wherein determining the indicator score based on the determined geolocation information comprises:
determining the indicator score responsive to determining that the determined geolocation information indicates that the first community is a target of a threat associated with the security indicator.

4. The method of claim 1, further comprising:
obtaining information relating to a set of threat intelligence, each piece of threat information in the set of threat intelligence comprising information relating to an incident, attack, indicator sighting, or attacker;
determining geolocation information for each piece of threat information in the set of threat intelligence;
computing a set of correlations between the determined geolocation information for each piece of threat information in the set of threat intelligence; and
determining an indicator score for a first piece of threat information in the set of threat intelligence based on the computed set of correlations.

5. The method of claim 4, further comprising:
facilitating display of information related to the first piece of threat information for the first community in the security information sharing platform responsive to determining that the determined indicator score exceeds a predetermined indicator score threshold for the first community.

6. The method of claim 1, wherein the indicator score comprises a relevancy score, and wherein the method further comprises:
determining the indicator score for the first piece of threat information by determining a relevance of the determined geolocation information to the first community.

7. The method of claim 1, wherein the indicator score comprises a severity score, and wherein the method further comprises:
determining the indicator score for the first piece of threat information by determining a severity of the determined geolocation information.

8. The method of claim 1, further comprising:
obtaining community threat information for the first community; and
determining the indicator score based on a correlation between the determined geolocation information and the obtained community threat information.

9. A non-transitory machine-readable storage medium comprising instructions executable by a processor of a computing device for considering geolocation information in a security information sharing platform, the machine-readable storage medium comprising:
instructions to determine geolocation information for a security indicator shared to the security information sharing platform;
instructions to determine an indicator score associated with the security indicator based on the determined geolocation information; and
instructions to facilitate display, via a user interface, the first indicator score to the first community of users based on the indicator score.

10. The non-transitory machine-readable storage medium of claim 9, further comprising:
instructions to determine a threat level for the first community based on the determined geolocation information; and
instructions to determine the indicator score based on the determined geolocation information and the determined threat level.

11. The non-transitory machine-readable storage medium of claim 9, further comprising:
instructions to obtain information relating to a set of threat intelligence, each piece of threat information in the set of threat intelligence comprising information relating to an incident, attack, indicator sighting, or attacker;
instructions to determine geolocation information for each piece of threat information in the set of threat intelligence;
instructions to compute a set of correlations between the determined geolocation information for each piece of threat information in the set of threat intelligence;
instructions to determine an indicator score for a first piece of threat information in the set of threat intelligence based on the computed set of correlations; and
instructions to facilitate display of information related to the first piece of threat information for the first community in the security information sharing platform responsive to determining that the determined indicator score exceeds a predetermined threshold for the first community.

12. The non-transitory machine-readable storage medium of claim 9, wherein the indicator score comprises a relevancy score, and wherein the non-transitory machine-readable storage medium further comprises:
instructions to determine the indicator score for the first piece of threat information by determining a relevance of the determined geolocation information to the first community.

13. The non-transitory machine-readable storage medium of claim 9, wherein the indicator score comprises a severity score, and wherein the non-transitory machine-readable storage medium further comprises:
instructions to determine the indicator score for the first piece of threat information by determining a severity of the determined geolocation information.

14. The non-transitory machine-readable storage medium of claim 9, further comprising:
instructions to obtain community threat information for the first community; and
instructions to determine the indicator score based on a correlation between the determined geolocation information and the obtained community threat information.

15. A system for considering geolocation information in a security information sharing platform comprising:
a physical processor implementing machine readable instructions that:
determine, based on geolocation information of a security indicator in the security information sharing platform, a severity indicator score for the security indicator;
determine, based on geolocation information of a security indicator in the security information sharing platform, a relevancy indicator score for the security indicator;
facilitate display, via a user interface, the security indicator to the first community responsive to the determined severity indicator score exceeding a predetermined severity score threshold; and
facilitate display, via the user interface, the security indicator to the first community responsive to the determined relevancy indicator score exceeding a predetermined relevancy score threshold.

16. The system of claim 15, wherein the physical processor implements machine readable instructions that cause the system to:
obtain information relating to a set of threat intelligence, each piece of threat information in the set of threat intelligence comprising information relating to an incident, attack, indicator sighting, or attacker;
determine geolocation information for each piece of threat information in the set of threat intelligence; and
compute a set of correlations between the determined geolocation information for each piece of threat information in the set of threat intelligence.

17. The system of claim 16, wherein the physical processor implements machine readable instructions that cause the system to:
compute the severity score for a first piece of threat information in the set of threat intelligence based on the computed set of correlations; and
facilitate display, via the user interface, the first piece of threat information to the first community responsive to the computed severity score for the first piece of threat information exceeding a predetermined severity score threshold.

18. The system of claim 17, wherein the physical processor implements machine readable instructions that cause the system to:
compute the relevancy score for the first piece of threat information in the set of threat intelligence based on the computed set of correlations; and
facilitate display, via the user interface, the first piece of threat information to the first community responsive to the computed relevancy score for the first piece of threat information exceeding a predetermined relevancy score threshold.

19. The system of claim 15, wherein the physical processor implements machine readable instructions that cause the system to:
determine a threat level for the first community based on the determined geolocation information;
determine the relevancy score based on the determined threat level; and
facilitate display, via the user interface, the security indicator to the first community responsive to the determine relevancy indicator score exceeding the predetermined relevancy score threshold.

20. The system of claim 15, wherein the physical processor implements machine readable instructions that cause the system to:
receive, from the first community, community threat information, the community threat information indicating a set of threat levels corresponding to a respective set of regions;
determine the indicator score based on a correlation between the determined geolocation information and the obtained community threat information.
